# EUROPEAN PATENT APPLICATION

(11) **EP 2 351 478 A1**
(43) Date of publication of application: **03.08.2011**
(21) Application number: 08877450.0
(22) Date of filing: 31.10.2008
(51) Int. Cl.: A01G 7/06, A01G 17/02

(54) **METHOD FOR CONTROLLING COLOURATION IN TABLE GRAPES BASED ON OLIGOGALACTURONIDES**

(30) Priority: 16.10.2008 MX 2008013788
(71) Applicant: Martinez Tellez, Miguel Ángel, CP 83000 Hermosillo, Sonora (MX)
(72) Inventor: VARGAS AISPURO, Irasema del Carmen, CP 83000 Hermosillo, Sonora (MX)
(74) Representative: Gill, Siân Victoria
(86) International application number: PCT/MX2008/000147
(87) International publication number: WO 2010/044649

(57) **Abstract**

The present invention claims a method making it possible to control the colour of table grapes, colour being a quality factor for the marketing thereof. The traditional colour promotion pathways make use of products such as Ethrel and methyl jasmonate (MeJA), which liberate or induce ethylene to improve colour, these being applied during veraison to augment the colour of the berries determined by the quantity and composition of skin anthocyanins. One alternative to the use of these compounds are the oligogalacturonides (OGAs) having a degree of polymerisation in the range from DP 7 - 20 which have the capacity to induce anthocyanins by an alternative pathway. The synthesis and precise application of OGAs form a method permitting appropriate control of the colouration of this type of fruit, together with the quantification of total anthocyanins.

## Description

### TECHNICAL FIELD

The present invention is in the field of agronomy and food industry for quality control in food and beverages, because it comprises an organic mixture and a method for controlling the colouration of table grapes, emerged under the oligogalacturonide hydrolysis.

### BACKGROUND OF THE INVENTION

Several technologies have been used to enhance color in grapes. Among these is the application of plant growth regulators such as auxin and abscisic acid as well as the use of shading (Jeong et al., 2004; legizamon, et.al, 2008). One of the most employed compounds to achieve the desired color in red grapes is Ethrel (2-chloroethyl phosphonic acid), an ethylene-releasing compound, applied to the grape plants during veraison to increase color in berries. The ethylene produced during this stage of development, results, additionally, in the increase in fruit metabolism, causing several changes in its development such as the increase of berry diameter, decreased acidity and the synthesis of anthocyanins responsible for color. In the case of red table grapes variety, there is a specific requirement established in the Project of Mexican Official Regulation PROY-NOM-120-SCFI-2004 regarding the color. This regulation project specifies the commercial information of table grapes and classifies the grapes into four categories: extra, first, second and sub-standard. Parameters such as color, size, weight and content of total soluble solids (TSS) are the main aspects of the classification.

Anthocyanin is responsible for a range of colors in plants, flowers and fruits, are water-soluble glycosides. In higher plants there are six different anthocyanins: pelargonidin (Pg), peonidin (Pn), cyanidin (Cy), malvidin (Mv), petunidin (Pt) and delphinidin (Df), cyanidin is found in higher proportion in the edible part of fruits, and in grapes malvidin, cyanidin and peonidin are generally found, and particularly in *Vitis vinifera* grape malvidin is found, which is why the content of anthocyanins is reported in malvidin units.

The exogenous application of some hormonal regulators has been evaluated to determine their effect on the color of grapes. These regulators are abscisic acid (ABA), salicylic acid (SA) and methyl jasmonate (MeJa), in which the accumulation of anthocyanins is favored. But in return, there is a premature ripening, an uncontrolled coloring exhibiting a disproportionate quality.

Oligogalacturonides (OGAs) seem to be involved in regulating many aspects of plant growth and development (Cote and Hahn, 1994). Some effects of OGAs application include induction of ethylene in tomato fruits and zucchini. Previous studies have determined that OGAs induce precursors of anthocyanins synthesis (Holton and Cornish, 1995), in carrot and bean cells (Messiaen et al., 1993). Based on the above we believe that the application of OGAs may have the ability to induce the synthesis of anthocyanins in fruits such as *Vitis vinifera.*

Therefore the use of Oligogalacturonides (OGAs) represents an organic alternative for coloring grapes. OGAs are molecules that exhibit various effects including elicitation of defense responses, regulation of growth, development, and induction of rapid responses at the cell surface, showing a uniform red colouration due to the production of the characteristic pigments that will provide the desired quality.

Anthocyanins responsible for red colouration in table grape fruits are, in order of importance malvidin, cyanidin and peonidin.

### Object of the invention

The object of the present invention is to provide a mixture to control colouration in red table grape fruit, based on hydrolyzed oligogalacturonides, a method for controlling the red color in fruits of red grapes, which consists of applying the mixture described above, on grape plants that produce red grapes, and a method for preparing said mixture.

### DETAILED DESCRIPTION OF THE INVENTION

Control of colouration by means of OGAs determines a new use of these polymers which ensure a controlled ripening and effective coloring, which provide a high quality in table grapes. OGAs were obtained by enzymatic hydrolysis of polygalacturonic acid (PGA), stopping the reaction by heating to 100°C for 30 minutes. Partial purification was performed by using an ultrafiltration equipment to recover OGAs in the range of 5-10 KDa. For the comparison of the degree of polymerization of 7-20 GP, these were compared with external standards. OGAs were frozen using liquid nitrogen in order to obtain a powdered mixture, which was applied to grape plants in a particular proportion. Six treatments were used: three using different concentrations of OGAs, methyl jasmonate (MeJa), Ethrel ® and a control (water).

After the application, grape color was measured in Color Index units for Red Grapes (CIRG), as shown in the table below:

| Treatment | Days post-application | | | | |
|---|---|---|---|---|---|
| | 1 | 5 | 10 | 15 | 20 |
| Blank | 1.38^{a} | 2.04^{a} | 2.37^{b} | 2.47 ^{b} | 2.74^{c} |
| OGAs 2000 ppm | 1.26^{a} | 2.69^{a} | 3.16^{a} | 3.15^{a} | 3.62^{a} |
| OGAs 1500 ppm | 1.30^{a} | 2.64^{a} | 3.31^{a} | 3.15^{a} | 3.19^{b} |
| OGAs 1000 ppm | 1.55^{a} | 2.64^{a} | 2.80^{a} | 3.02^{a} | 3.19^{c} |
| Ethrel 500 ppm | 1.17^{a} | 2.44^{a} | 2.96^{a} | 3.37^{a} | 3.76^{a} |
| MeJa 500 ppm | 1.13^{a} | 2.20^{a} | 3.41^{a} | 3.20^{a} | 3.31^{b} |

Clusters administered with a mixture at a concentration of 2000 ppm OGAs have a consistent and firm colouration, which provides a quality of red grapes. Color development from veraison starts from the green-yellow (CIRG <2) to red (CIRG <4) (Carreño et al., 1995).

To determine the best way to control the red color in grapes, a series of experiments was performed, wherein doses of the mixture, application times, application conditions, and periods of application were tested, finding that the results are obtained: when the mixture was applied in an amount of 0.25 L per plant during the morning at a temperature of 18-20°C for a period of two days during the veraison period.

## Claims

1. A mixture for controlling the color in fruits of red table grapes, wherein the mixture comprises an amount of oligogalacturonides, with a molecular weight of 5-10 KDa.

2. The mixture of claim 1, wherein the amount of OGAs is at a concentration of 2000 ppm.

3. The mixture of claims 1 and 2, wherein the mixture comprises an agronomically acceptable adjuvant.

4. The mixture of claim 3, wherein the agronomically acceptable adjuvant is 1% glycerin.

5. The mixture of any one of precedent claims, wherein the fruits of red table grape belong to the varieties Flame Seedless and Red Globe.

6. A method for controlling the red colouration in red table grapes fruits, wherein the method consists of applying the mixture according to any one of precedent claims on grape plants producing red fruits.

7. The method of claim 6, wherein the mixture is applied in an amount of 0.25 L per plant during the morning at a temperature of 18-20°C for a period of two days.

8. The method of claims 6 and 7, wherein the plant is at the veraison stage.

9. A method for preparing the mixture described in claims 1, 2, 3, 4 and 5, which comprises the following steps:
i) Enzimatically hydrolyzing polygalacturonic acid in a medium of 20 mM glacial acetic acid, NaOAc (20 mM) at pH 5, and a temperature of 23°C,
ii) Heating the mixture of step i) to 100°C for 30 minutes to stop hydrolysis,
iii) Selecting OGAs with a molecular weight of 5-10 KDa and a degree of polymerization of 3-20 GP.
iv) Lyophilizing with liquid nitrogen the OGAs selected.
v) Hydrating the lyophilized OGAs with distilled water in a ratio of 2000 ppm.
vi) Adding to a 0.1% adjuvant to the mixture obtained in step v).

10. The method according to claim 9 wherein the enzyme used for polygalacturonide acid hydrolysis belongs to the group of enzymes that hydrolyze polygalacturonide acid.

11. The method according to claim 10, wherein said enzyme is endo-PG from *Aspergillus niger.*

12. The method according to claims 9, 10 and 11, wherein the agronomically acceptable adjuvant is 1% glycerin.
